# EUROPÄISCHE PATENTSCHRIFT

(11) **EP 1 737 765 B1**
(45) Veröffentlichungstag und Bekanntmachung des Hinweises auf die Patenterteilung: **02.09.2009**
(21) Anmeldenummer: 05736532.2
(22) Anmeldetag: 07.04.2005
(51) Int. Cl.: B65D 90/50, B29C 69/00, B65D 88/06, B65D 90/08

(54) **BEHÄLTER ZUR AUFNAHME VON MEDIEN SOWIE VERFAHREN ZUR HERSTELLUNG UND ZUM ÜBERPRÜFEN DER DICHTHEIT DES BEHÄLTERS**
CONTAINER FOR ACCOMMODATING MEDIA, AND METHOD FOR THE PRODUCTION AND VERIFICATION OF THE LEAKPROOFNESS OF SAID CONTAINER
CONTENANT DESTINE A CONTENIR DES FLUIDES ET PROCEDE DE FABRICATION D'UN TEL CONTENANT ET DE CONTROLE DE L'ETANCHEITE DUDIT CONTENANT

(30) Priorität: 08.04.2004 DE 102004017535
(43) Veröffentlichungstag der Anmeldung: 03.01.2007
(73) Patentinhaber: Richter, Günter, 57610 Altenkirchen (DE)
(72) Erfinder: Richter, Günter, 57610 Altenkirchen (DE)
(74) Vertreter: Schaumburg, Karl-Heinz
(86) Internationale Anmeldenummer: PCT/EP2005/003675
(87) Internationale Veröffentlichungsnummer: WO 2005/098390

(56) Entgegenhaltungen:
- EP-A- 1 184 157
- WO-A-01/07342
- WO-A-90/14384
- DE-U1- 20 107 626
- FR-A- 1 423 402
- US-A- 4 653 312
- US-A- 5 054 645
- US-A- 5 102 481

## Beschreibung

Die Erfindung betrifft einen doppelwandigen Behälter, der aus zumindest zwei miteinander verbundenen Segmenten zusammengesetzt ist. Ferner betrifft die Erfindung ein Verfahren zum Überprüfen der Dichtheit eines Behälters zur Aufnahme von vorzugsweise flüssigen Medien. Dieses Verfahren dient zum Überwachen des Behälters, der aus mindestens zwei Segmenten zusammengesetzt ist, die an mindestens einer Stoßstelle miteinander verschweißt sind. Weiterhin betrifft die Erfindung einen Behälter, dessen Innenseite mit einer Barriereschicht überzogen ist, sowie ein Verfahren zum Herstellen eines solchen Behälters.

Es sind großvolumige Behälter aus Kunststoff bekannt, die aus mehreren Segmenten zusammengesetzt sind. Die Segmente sind vorzugsweise mit Hilfe eines Blasverfahrens hergestellt worden

Aus der Veröffentlichung der internationalen Patentanmeldung WO 01/07342 A1 ist ein großvolumiger Behälter zur Aufnahme von flüssigen Medien bekannt. Der Behälter umfasst zwei schalenartige Endteile mit jeweils einer ringförmigen, ebenen Anschlussfläche und mindestens ein hülsenartiges aus mindestens zwei Ringsegmenten zusammengesetzten Mittelteil, das ebenfalls zwei ringförmige und ebene Anschlussflächen sowie eine Füll- und Entleerungsöffnung hat. Sowohl die Endteile als auch die Ringsegmente des Mittelteils sind im Blasverfahren hergestellt. Im Bereich ihrer Anschlussflächen sind die Teile durch eine innere und äußere Verschweißung miteinander verbunden. Sowohl die beiden Endteile als auch die Ringsegmente im Bereich ihrer Anschlussflächen besitzen eine umlaufende Kammer. Die Anschlussflächen gehen an ihren umlaufenden Begrenzungskanten in zurücklaufende Schrägen zur Bildung von Schweißnuten zwischen den Endteilen und/oder Ringsegmenten des Mittelteils über.

Nach der Fertigung eines solchen Behälters muss die Dichtheit des Behälters überprüft und je nach Anforderung an den Behälter nachgewiesen werden. Jedoch ist bei Kunststoffbehältern eine Leckage nicht durch einfache Überwachung eines Druckabfalls beim Beaufschlagen des Behälters mit einem Überdruck möglich, da sich ein Kunststoffbehälter, insbesondere ein großvolumiger Kunststoffbehälter bei einer Druckbeaufschlagung weitet, wodurch ein Druckabfall auch ohne Leckage entsteht. Eine Leckage könnte auch durch Ein- bzw. Untertauchen des Behälters in einem flüssigen Medium ermittelt werden, was jedoch insbesondere bei großvolumigen Behältern schwer durchführbar und sehr aufwendig ist. Auch ein Befüllen der Behälter mit einem flüssigen Medium, wie z.B. Wasser, ist sehr aufwendig und schwer in den Produktionsablauf einzugliedern.

Bei einigen Behältern mit erhöhten Anforderungen an die Dichtheit ist ein Überwachungssystem zum Ermitteln von Undichtigkeiten erforderlich. Behälter mit einer erhöhten Anforderung an die Dichtheit dienen z.B. zur unterirdischen Lagerung von Gefahrgütern. Das Überwachungssystem dient dazu, Leckagen unverzüglich nach ihrem Auftreten zu ermitteln und Maßnahmen zur Schadensminimieru ng einzuleiten. Bei bekannten Behältern erfolgt eine solche Überwachung zumindest bei zweischaligen Behältern mit Hilfe eines so genannten Vakuum-Überwachungsgerätes. Jedoch ist die Herstellung von doppelwandigen blasgeformten Kunststoffbehältern, insbesondere mit einem großen Volumen, nicht mit vertretbarem Aufwand möglich.

Unterirdische Gefahrgut-Lagerbehälter, z.B. Heizöl-Lagerbehälter, müssen gegen Permeation von leichtflüchtigen Kohlenwasserstoffverbindungen beständig sein. Vor allem bei einer unterirdischen Anordnung des Gefahrgut-Lagerbehälters ist eine solche Beständigkeit erforderlich, um das den Behälter umgebende Erdreich insbesondere nicht mit austretenden Kohlenwasserstoffverbindungen zu kontaminieren. Es ist bekannt, insbesondere Kunststoffbehälter mit einer Permeationssperre zu versehen, wobei die Innenwand des Behälters einem Fluorierungs-Verfahren unterzogen wird. Eine solche Fluorierung erfolgt in Fluorierungskammern, wobei zumindest eine der Behältergröße entsprechende Fluorierungskammer erforderlich ist, um den Behälter zu fluorieren. Dieses ist auch insbesondere bei großvolumigen Behältern > 0,5 m³ Volumen mit einem erheblichen Kostenaufwand verbunden, wobei derzeit keine Fluorierungskammern für Behälter mit mehreren Kubikmetern Volumen zur Verfügung stehen. Eine weitere Möglichkeit besteht darin, die Innenwände einzelner Behältersegmente mit einer so genannten Inline-Fluorierung zu versehen, wobei nur die Innenfläche mit einer Sperrschicht versehen wird. An den Berührungskanten und Schweißnähten ist dann jedoch kein Schutz gegen Permeation gegeben.

Aus dem Dokument US-A-4 653 312 ist ein Verfahren bekannt, bei dem ein zum Umgebungsdruck verschiedener Innendruck in einem Zwischenraum zwischen einem Innenbehälter und einem Außenbehälter angelegt wird. Die Druckänderung des Innendrucks wird überwacht.

Aus dem Dokument EP-A-1 184 157 ist bekannt, einen Behälter aus mindestens zwei Teilen zusammenzusetzen und diese zwei Teile mit Hilfe einer Schweißverbindung zu verbinden. Ferner ist aus diesem Dokument bekannt, auf der Innenseite des Behälters eine Barriereschicht aufzutragen.

Aus dem Dokument DE 201 07 626 U1 ist bekannt, PTFE-Formkörper dadurch miteinander zu verbinden, dass an ihren Stoßflächen eine mit PTFE schmelzverbundene Schicht aus einem thermoplastischen Fluorpolymer vorgesehen ist. Die verbundenen PTFE-Formkörper dienen insbesondere zum Auskleiden eines Behälters.

Aufgabe der Erfindung ist es, einen Behälter, ein Verfahren zum Herstellen eines Behälters sowie ein Verfahren zum Überwachen der Dichtheit eines Behälters anzugeben, wobei der Behälter einfach und kostengünstig hergestellt werden kann sowie die Dichtheit des Behälters auf einfache Art und Weise ermittelt werden kann.

Diese Aufgabe wird für ein Verfahren zum Überprüfen der Dichtheit eines Behälters zur Aufnahme von vorzugsweise flüssigen Medien mit den Merkmalen des Patentanspruchs 1 gelöst. Weitere vorteilhafte Ausgestaltungen der Erfindung sind in den Unteransprüchen angegeben.

Vor allem durch das Vorsehen einer Prüföffnung in der Schweißverbindung kann durch das Überwachen des angelegten zur Umgebung verschiedenen Innendrucks die Dichtheit der Schweißverbindungen durch Überwachung des Druckanstiegs kontrolliert werden. Dadurch wird auf einfache Art und Weise das korrekte Ausführen der Schweißverbindungen und somit die Dichtheit des Behälters überprüft.

Ein zweiter Aspekt der Erfindung betrifft einen doppelwandigen Behälter, der vorzugsweise zur Lagerung von Gefahrgut dient. Der Behälter ist aus mindestens zwei miteinander verbundenen Segmenten zusammengesetzt. Jedes Segment umfasst ein im Wesentlichen biegesteifes Kunststoffformteil, das eine Innenschale und eine Außenschale hat. Die Innenschale des Kunststoffformteils des Segments ist in einem Abstand zu der Außenschale des Kunststoffformteils derart angeordnet, dass ein Innenraum zwischen den beiden Schalen vorhanden ist. Die ersten und zweiten Kunststoffformteile sind derart miteinander verbunden, dass mindestens ein gasdicht abgeschlossener Innenraum zwischen Innenschale und Außenschale des Behälters vorhanden ist. Ferner ist eine Vorrichtung zum Erzeugen und Überwachen eines vom Umgebungsdruck verschiedenen Innendrucks in den mindestens einen abgeschlossenen Innenraum vorgesehen.

Dadurch wird bei dem erfindungsgemäßen Behälter die Dichtheit der Innen- und Außenschale durch Überwachen des Innendrucks kontrolliert und/oder überwacht. Bei einer kontinuierlichen Überwachung des Innendrucks können auch Leckagen erkannt werden, die erst bei der Benutzung des Behälters auftreten, wodurch dann unverzüglich Maßnahmen zur Schadensminimierung bzw. zur Schadensverhinderung eingeleitet werden können. Ferner können dadurch Sicherheitsauflagen zur Lagerung von Gefahrgut erfüllt werden.

Ein dritter Aspekt der Erfindung betrifft ein Verfahren zum Überwachen der Dichtheit eines Behälters, der zur Lagerung von Gefahrgut geeignet ist. Der Behälter wird aus mindestens zwei Segmenten zusammengesetzt, wobei jedes Segment ein im wesentlichen biegesteifes Kunststoffformteil mit einer Innenschale und einer Außenschale enthält. Die Innenschale des Kunststoffformteils eines Segments wird jeweils zur Außenschale desselben Kunststoffformteils in einem Abstand angeordnet. Die Segmente werden derart miteinander verbunden, dass mindestens ein gasdicht abgeschlossenes Innenraum zwischen Innenschale und Außenschale des Behälters erzeugt wird. Ein zum Umgebungsdruck verschiedener Innendruck wird in dem mindestens einen Innenraum angelegt. Eine Änderung des Innendrucks wird überwacht.

Dadurch wird die Dichtheit des Behälters kontrolliert und beim permanenten Überwachen des Innendrucks kann die Dichtheit des Behälters dauerhaft überwacht werden. Somit können auch nachträglich auftretende Leckagestellen mit relativ geringem Aufwand festgestellt werden.

Ein vierter Aspekt der Erfindung betrifft einen weiteren Behälter, der vorzugsweise zur Lagerung von Gefahrstoffen dient. Der Behälter ist aus mindestens zwei Segmenten zusammengesetzt, wobei jedes Segment mindestens ein Kunststoffformteil enthält, das mindestens eine Behälterwand umfasst. Ein Teil der inneren Oberfläche des Behälters ist durch die Behälterwände gebildet. Die Behälterwand des ersten Segments und die Behälterwand des zweiten Segments enthalten jeweils eine gasdichte Barriereschicht. Die Behälterwand des ersten und die Behälterwand des zweiten Segments sind durch eine Schweißverbindung miteinander verbunden, wobei in dem beim Schweißen zugeführten Zusatzwerkstoff zumindest ein Anteil eines Barrierematerials für eine gasdichte Barriereschicht enthalten ist. Die Schweißverbindung ist derart ausgeführt, dass die durch die Behälterwände und die Schweißverbindung gebildete Wandung des Behälters eine geschlossene Barriereschicht aufweist.

Dadurch ist dieser Kunststoffbehälter zur Lagerung von Stoffen geeignet, die eine Barriereschicht an der inneren Wandung des Behälters erfordern, um insbesondere eine Permeation von Stoffen durch die Behälterwand zu verhindern.

Ein fünfter Aspekt der Erfindung betrifft ein Verfahren zum Herstellen eines Behälters, der vorzugsweise zur Lagerung und zum Transport von Gefahrstoffen dient. Bei dem Verfahren wird der Behälter aus mindestens zwei Segmenten zusammengesetzt, wobei jedes Segment ein Kunststoffformteil enthält, das mindestens eine Behälterwand umfasst. Ein Teil der inneren Oberfläche des Behälters wird durch die Behälterwände gebildet. Durch die Behälterwand des ersten Segments und die Behälterwand des zweiten Segments wird jeweils eine gasdichte Barriereschicht erzeugt. Die Behälterwand des ersten und die Behälterwand des zweiten Segments wird mit Hilfe einer Schweißverbindung verbunden, wobei beim Schweißen ein Zusatzwerkstoff zugeführt wird, der zumindest einen Anteil eines Barrierematerials für eine gasdichte Barriereschicht enthält. Die Schweißverbindung wird derart ausgeführt, dass die Behälterwände mit der Schweißverbindung nach dem Fertigstellen der Schweißverbindung eine geschlossene Barriereschicht aufweisen.

Durch dieses Verfahren ist es möglich, einen großvolumigen Kunststoffbehälter kostengünstig herzustellen, der auch zur Lagerung und zum Transport von Gefahrstoffen, wie z.B. Heizöl, geeignet ist.

Ein sechster Aspekt der Erfindung betrifft einen doppelwandigen Behälter vorzugsweise zur Lagerung von Gefahrgut. Der Behälter hat eine erste Schale, die aus mindestens zwei Segmenten zusammengesetzt ist, wobei jedes Segment mindestens ein Kunststoffformteil enthält. Der Behälter hat eine zweite Schale, die derart zu der ersten Schale angeordnet ist, dass zwischen den Schalen ein Raum gasdicht umschlossen ist. Ferner ist eine Vorrichtung zum Überwachen der Gasdichtheit des umschlossenen Raums vorgesehen.

Ein solcher Behälter ist kostengünstig herzustellen und kann relativ einfach auf Dichtheit geprüft werden.

Zum besseren Verständnis der vorliegenden Erfindung wird im folgenden auf die in den Zeichnungen dargestellten bevorzugten Ausführungsbeispiele Bezug genommen, die anhand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und/oder den Verfahren sowie derartige weitere Anwendungen der Erfindung, wie sie darin aufgezweigt sind, als übliches derzeitiges oder künftiges Fachwissen eines zuständigen Fachmannes angesehen werden. Die Figuren zeigen Ausführungsbeispiele der Erfindung, nämlich:
- Figur 1: eine Seitenansicht eines Kunststoffbehälters;
- Figur 2: eine Draufsicht des Behälters nach Figur 1;
- Figur 3: eine Schnittdarstellung einer Schweißverbindung zwischen zwei Segmenten des Kunststoffbehälters nach den Figuren 1 und 2 gemäß einer ersten Ausführungsform der Erfindung;
- Figur 4: eine Schnittdarstellung der Schweißverbindung zwischen zwei Segmenten des Kunststoffbehälters nach den Figuren 1 und 2 gemäß einer zweiten Ausführungsform der Erfindung;
- Figur 5: eine Schnittdarstellung einer Schweißverbindung zwischen zwei Segmenten des Kunststoffbehälters nach den Figuren 1 und 2 gemäß einer dritten Ausführungsform der Erfindung;
- Figur 6: einen doppelwandigen Behälter, dessen Außenschale jeweils aus mindestens zwei Segmenten zusammengesetzt ist; und
- Figur 7: einen doppelwandigen Behälter, dessen Innenschale aus mindestens zwei Segmenten zusammengesetzt ist.

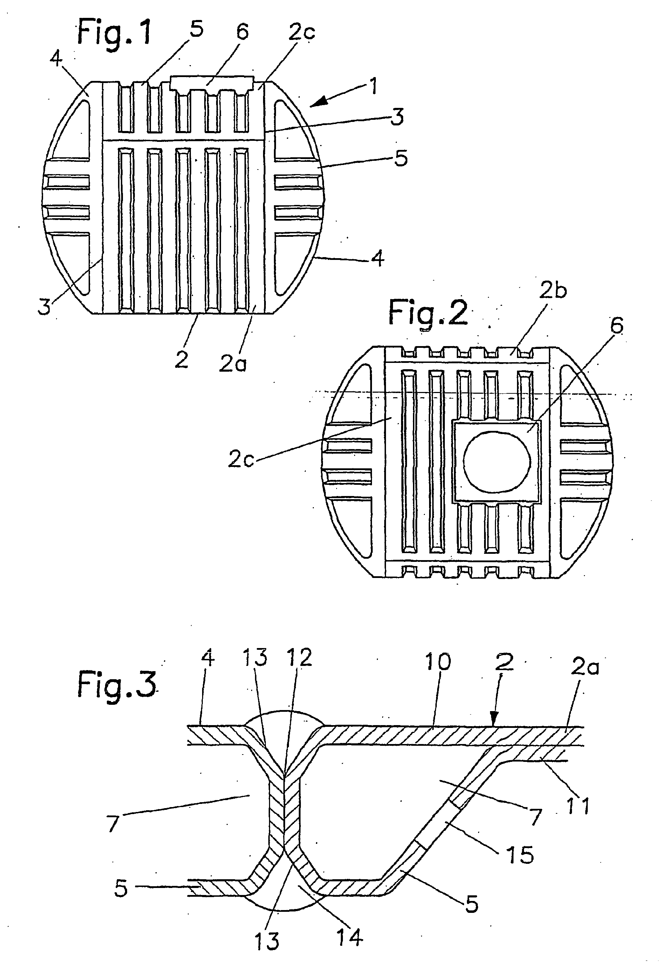

In den Figuren 1 und 2 sind Ansichten eines großvolumigen Behälters zur Lagerung von flüssigen Medien, insbesondere von Gefahrstoffen, dargestellt. Jedoch kann ein solcher Behälter auch zur Lagerung von Regenwasser oder anderen ungefährlichen Medien sowie zur Lagerung von insbesondere pulverförmigen Medien genutzt werden. Großvolumige Behälter haben ein Volumen vom mindestens 0,5 m³. Großvolumige Behälter mit mehreren m³ Volumen bis zu mehreren 10 m³ Volumen werden auch als Tank bezeichnet.

Der Kunststoffbehälter 1 hat ein zylinderförmiges hohles Mittelteil 2, das an seinen beiden Stirnseiten 3 mit jeweils einem Endteil 4 verbunden ist, wodurch die Endteile 3 und das Mittelteil 2 einen geschlossenen Behälter 1 bilden. Das Mittelteil 2 ist aus drei Ringsegmenten 2a, 2b, 2c zusammengesetzt, wobei sowohl die Ringsegmente 2a, 2b, 2c als auch die beiden Endteile 4 mit Hilfe von Schweißverbindungen derart fest miteinander verbunden sind, dass ein geschlossener, dichter Behälter 1 erzeugt wird. Die drei Ringsegmente 2a, 2b, 2c und die zwei Endteile 4 enthalten Versteifungsrippen 5, die im wesentlichen den gleichen Querschnitt haben. Die Länge der Versteifungsrippen 5 kann jedoch je nach Position der Versteifungsrippe 5 am Behälter 1 und den statischen Anforderungen an den Behälter 1 unterschiedlich lang ausgebildet sein. An dem oberen Ringsegment 2c des Mittelteils ist eine Einfüll- und Entleerungsöffnung 6 angeformt. Die Versteifungsrippen 5 sind an den äußeren Wandflächen angeordnet, wodurch die Innenseite des Behälters 1 eine im wesentlichen glatte Oberfläche hat. Durch die Versteifungsrippen 5 wird einer Verformung des Behälters 1 beim Befüllen und durch äußere Krafteinwirkung, z.B. nach dem Einbringen des Behälters 1 ins Erdreich, verhindert. Die glatte Behälterinnenseite ermöglicht ein leichtes Entleeren sowie eine einfache Reinigung des Behälters 1.

In Figur 3 sind zwei aneinander stoßende Versteifungsrippen 5 dargestellt, die an den Rändern aneinander stoßender Segmente 2 und 4 des Behälters 1 ausgebildet sind. Die Versteifungsrippen 5 enthalten Kammern 7, die bei der Herstellung der Ringsegmente 2a, 2b, 2c und der Endteile 4 im so genannten Blasverfahren einstückig mit dem jeweiligen Segment 2a, 2b, 2c bzw. mit dem Endteil 4 hergestellt worden sind. Zur Herstellung der Ringsegmente 2a, 2b, 2c und der Endteile 4 im Blasformverfahren wird auf die bereits erwähnte internationale Patentanmeldung WO 01/07342 A1 verwiesen, die hiermit durch Bezugnahme in die vorliegende Beschreibung aufgenommen wird.

Das Ringsegment 2a und das Endteil 4 sind mit Hilfe einer inneren Schweißverbindung 16 und einer äußeren Schweißverbindung 17 fest miteinander verbunden, wobei zumindest die Schweißung 16 als durchgehende Schweißnaht ausgeführt ist und dadurch eine dichte Verbindung zwischen dem Ringsegment 2a und dem Endteil 4 besteht. Das Endteil 4 und das Ringsegment 2a haben jeweils eine innenwand 10 und eine Außenwand 11. An den aneinander stoßenden Kanten der Versteifungsrippen 5 des Endteils 4 und des Ringsegments 2a sind Schrägen vorgesehen, die beim Aneinanderstoßen des Endteils 4 an das Ringsegment 2a jeweils an der Innenseite 10 und der Außenseite 11 eine V-förmige Schweißnut 14 bilden. Die Schrägen haben in Figur 3 das Bezugszeichen 13.

Das Endteil 4 und das Ringsegment 2a haben jeweils eine Anschlussfläche 12, die beim Aneinanderfügen des Endteils 4 an das Ringsegment 2a aneinander liegen. An die Anschlussfläche 12 schließt sich jeweils nach innen und außen eine bereits beschriebene Schräge 13 an, die dann als Schweißnut 14 dient. Die Schrägen 13 der Schweißnut 14 haben einen Winkel im Bereich von 15 bis 45°. Vorzugsweise hat die innere Wandung 10 eine größere Wandstärke als die äußere Wandung 11. Ferner ist in der Außenwand 11 eine Öffnung 15 vorgesehen, die beim bereits erwähnten Blasverfahren als Einbringöffnung für die beim Blasverfahren erforderliche Luft bzw. ein erforderliches Gas dient und die später auch zum Einbringen anderer Stoffe, wie z.B. Beton oder Schaum in die Kammer 7 genutzt werden kann.

Der Behälter 1 wird als unterirdischer Gefahrgut-Lagerbehälter genutzt. Unterirdische Gefahrgut-Lagerbehälter müssen derart ausgeführt sine, dass keine Permeation von leicht flüchtigen Kohlenwasserstoffverbindungen möglich ist. Insbesondere bei Druckunterschieden zwischen Innenbehälter und dem umgebenden Erdreich ist bei Kunststoffbehältern die Gefahr von Permeation gegeben. Bei einer Permeation, d.h. Durchdringung der Behälterwand, von leicht flüchtigen Kohlenwasserstoffverbindungen würden diese in die Umgebung des Behälters 1 abgegeben werden, wodurch diese kontaminiert wird. Es ist bekannt, Kunststoffbehälter mit Hilfe eines Fluorierungs-Verfahrens mit einer Permeationssperre zu versehen. Aufgrund der vorliegenden Behältergröße des Behälters 1 ist jedoch eine Fluorierung des gesamten Behälters wirtschaftlich nicht vertretbar, da die Fluorierung des Behälters in einer so genannten "Fluorierungskammer" durchgeführt werden muss, die derzeit nicht in Abmessungen vorhanden sind, die für derartige Behältergrößen geeignet sind.

Eine weitere Möglichkeit, die innere Oberfläche des Behälters 1 mit Hilfe eines Fluorierungs-Verfahrens zu behandeln, besteht durch eine so genannte Inline-Fluorierung der einzelnen Behältersegmente 2a, 2b, 2c, 4. Bei der Inline-Fluorierung wird eine Barriereschicht zumindest an der Innenseite der Innenwand 10 der Behältersegmente 2a, 2b, 2c, 4 erzeugt. An den Verbindungsstellen der Segmente, d.h. insbesondere an der Schweißnaht 16 ist jedoch dann keine Barriereschicht vorhanden. Erfindungsgemäß wird beim Herstellen der Schweißverbindung 16 ein Zusatzwerkstoff zugeführt, der zumindest einen Anteil eines Barrierematerials enthält. Die Schweißverbindung 16 ist dabei derart ausgeführt, dass die innere Oberfläche 10 des Behälters 1 nach dem Schweißen eine geschlossene Barriereschicht aufweist. Die einzelnen Behältersegmente 2a, 2b, 2c, 4 werden einzeln im Offline-Verfahren fluoriert. Anschließend wird die bei der Fluorierung erzeugte Barriereschicht an den Schweißnahtflächen, d.h. an den Schrägen 13, abgeschliffen. Die Schweißverbindung 16, 17 zwischen den einzelnen Segmenten 2a, 2b, 2c, 4 wird mit Hilfe eines Schmelz-Schweiß-Verfahrens hergestellt, wobei der zugeführte Zusatzwerkstoff, d.h. das zugeführte Schmelzmaterial, aus einem Materialgemisch besteht, das einen Anteil eines Barrierematerials enthält. So ein Barrierematerial wird z.B. unter dem Markennamen "Selar" von der Firma Du Pont vertrieben. Der übrige Bestandteil des Zusatzwerkstoffs ist ein übliche beim Schmelz-Schweiß-Verfahren verwendeter Zusatzwerkstoff, vorzugsweise der gleiche Kunststoff, aus dem die Segmente 2a, 2b, 2c, 4 bestehen.

Das Ausbilden einer geschlossenen Barriereschicht, die zuvor für den einschichtigen Behälter 1 beschrieben worden ist, kann auch bei Behältern angewendet werden , bei denen die einzelnen Segmente mehrschichtig sind. Bei diesen Behältern ist zumindest eine der Schicht, vorzugsweise die Behälterinnenseite, als Barriereschicht ausgebildet.

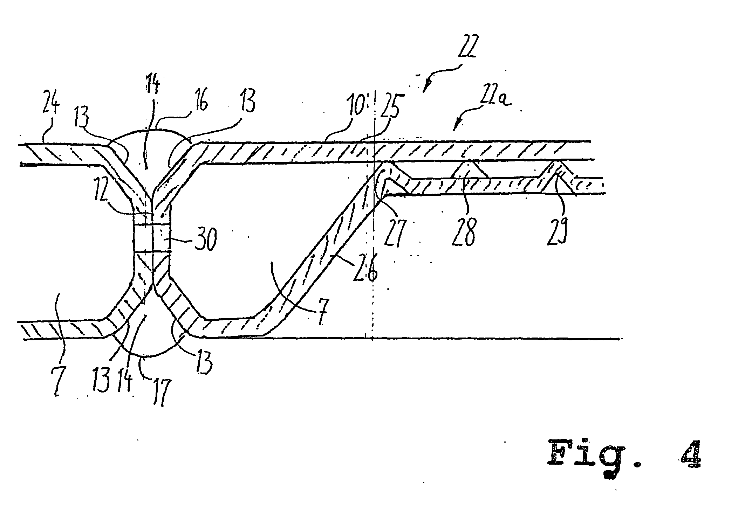

In Figur 4 ist eine Schnittdarstellung ähnlich der Schnittdarstellung nach Figur 3 dargestellt, wobei der Behälter nach Figur 4 im Unterschied zu dem Behälter 1 nach den Figuren 1 bis 3 ein doppelwandiger Behälter ist. Gleiche Elemente haben gleiche Bezugszeichen. Der doppelwandige Behälter nach Figur 4 hat ähnlich dem Behälter 1 nach den Figuren 1 bis 3 ein Mittelteil 22, das aus mehreren Ringsegmenten zusammengesetzt ist, von denen ein Ringsegment in Figur 4 mit 22a bezeichnet ist. Das Ringsegment 22a grenzt an der Anschlussfläche 12 an ein Endteil 24, wobei sowohl am Ringelement 22 als auch am Endteil 24 jeweils eine Kammer 7 umlaufend ausgebildet ist. Zumindest an den Verbindungsstellen der Ringsegmente untereinander und der Ringsegmente mit den Endteilen 24 ist jeweils eine Kammer 7 vorgesehen, wodurch eine Anschlussfläche 12 sowie durch die Schrägen 13 Schweißnuten 14 gebildet sind. Von der Behälterinnenseite 10 her ist eine Schweißverbindung 16 in der inneren V-förmigen Schweißnut vorgesehen und an der Behälteraußenseite 11 ist eine Schweißverbindung 17 in der V-förmigen Nut 14 eingebracht. Die Schweißverbindung 16 dichtet das den Behälter innen zur Anschlussfläche 12 hin ab und die Schweißnaht 17 dichtet die Außenseite 11 zur Anschlussfläche des Behälters hin ab.

Im Unterschied zur Anordnung nach Figur 3 ist die dort dargestellte Blasöffnung 15 bei dem Behälter nach Figur 4 gasdicht verschlossen worden. Das Ringsegment 22a enthält ei ne Innenwand 25 und eine Außenwand 26, wobei in der Außenwand Ausformungen 27, 28, 29 gebildet sind, die als Abstandshalter zwischen Innenwand 25 und Außenwand 26 dienen. Die in der Außenwand 26 gebildeten Abstandshalter 27, 28, 29 liegen zumindest nach dem Befüllen des Behälters punktuell an der Außenseite der Innenwand 25 an, wobei ein zwischen Innenwand und Außenwand befindliches Gas beliebig zwischen den Abstandshaltern 27, 28, 29 zirkulieren kann bzw. an den Abstandshaltern 27, 28, 29 vorbeiströmen kann. Zwischen der Kammer 7 des Ringelements 22a und der Kammer 7 des Endteils 24 ist in der Anschlussfläche 12 mindestens eine Öffnung vorgesehen, durch die Gas aus der Kammer 7 des Ringsegments 22a in die Kammer 7 des Endstücks 24 strömen kann und umgekehrt. Auch zwischen den Anschlussflächen der Ringsegmente untereinander und weiteren Segmenten des Behälters sind derartige Öffnungen vorgesehen, so dass ein geschlossener Innenraum zwischen den Innenwänden und den Außenwänden aller Segmente hergestellt ist.

Mit Hilfe eines Vakuum-Warngerätes, das mit diesem geschlossenen Innenraum aller Segmente 22a, 24 verbunden ist, wird im Innenraum ein Unterdruck, d.h. ein Vakuum, erzeugt. Das Vakuum-Warngerät überwacht einen Druckanstieg im innenraum, und erzeugt bei einem Druckanstieg, der auf eine Leckage schließen lässt, eine Warnmeldung. Dadurch kann der doppelwandige Behälter sowohl bei der Herstellung einfach auf Dichtheit überprüft werden, als auch während einer Benutzung des Behälters insbesondere bei der Lagerung von Gefahrstoffen, ist eine kontinuierliche Dichtheitsprüfung möglich. Dadurch ist eine Überwachung der Dichtheit des Behälters ist auf einfache Art und Weise gewährleistet. Eine solche Überwachung, die insbesondere bei der Lagerung von Gefahrgütern empfohlen ist, ist durch einen erfindungsgemäßen Behälter nach Fig. 4 einfach möglich. Wird bei dieser Überprüfung eine Undichtigkeit des Behälters festgestellt, können sofort Maßnahmen zur Schadensminimierung durchgeführt werden. Alternativ zu den Abstandshaltern kann zwischen der Innenwand 25 und der Außenwand 26 sowohl in der Kammer 7 als auch im Bereich der Abstandshalter ein offenzelliger Kunststoffschaum bzw. ein offenzelliger Schaumstoff eingebracht werden, der eine Gaszirkulation zumindest zulässt. Durch diesen offenzelligen Kunststoffschaum ist auch eine Überwachung mit Hilfe eines Vakuu m-Warngerätes möglich. Alternativ kann auf die Bohrung 30 zwischen den einzelnen Segmenten verzichtet werden, wenn jedes Segment ein separates Vakuum-Warngerät zum Überwachen des jeweiligen Segmenthohlraums erhält.

Bei anderen Ausführungsbeispielen sind sowohl Abstandshalter 27, 28, 29 als auch ein offenporiger Kunststoffschaum zwischen den Abstandshaltern 27, 28, 29 und in der Kammer 7 vorgesehen. Bei alternativen Ausführungsbeispielen ist weder ein Kunststoffschaum in den Hohlräumen der Segmente noch sind Abstandshalter 27, 28, 29 vorgesehen. Jedoch haben diese Behälter gegenüber der in Figur 4 gezeigten Ausführungsform und gegenüber einem Behälter, in dessen Hohlräumen ein offenporiger Kunststoffschaum eingebracht ist, eine geringere Stabilität.

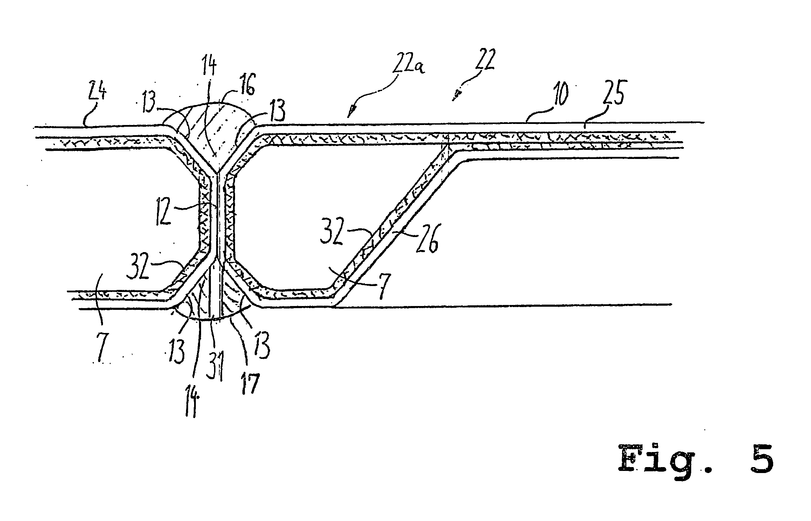

In Figur 5 ist eine Schnittdarstellung eines Behälterabschnitts gezeigt, der aus doppelwandigen Kunststoffsegmenten hergestellt worden ist. Bei dem Behälter nach Figur 5 ist anstatt der Abstandshalter 27, 28, 29 zwischen der Innenwand 27 und der Außenwand 26 ein offenzelliger Kunststoffschaum 32 eingebracht, der zumindest in einem Bereich außerhalb der Kammer 7 auch als Abstandshalter zwischen der innenwand 25 und der Außenwand 26 dient. Ferner ist durch den offenzelligen Kunststoffschaum 32, wie bereits im Zusammenhang mit Figur 4 beschrieben, auch ein Gasaustausch zumindest innerhalb eines Segments 22a, 24 möglich. Im Unterschied zu dem Behälter n ach Figur 4 sind die Kammern 7 des Ringsegments 22a und die Kammer 7 des Endteils 24 nicht über eine Öffnung miteinander verbunden. Jedoch ist auch bei dem Behälter nach Figur 5 die Schweißung 16 und die Schweißung 17 jeweils derart umlaufend dichtend ausgeführt, dass im Bereich der Anschlussflächen 12 ein gasdicht abgeschlossener Raum entsteht, der jeweils von der Anschlussfläche des Ringsegments 22a, von der Anschlussfläche des Endteils 24 sowie durch die Schweißungen 16 und 17 begrenzt ist.

In der Schweißnaht 17 ist zumindest an einer Stelle eine Prüfbohrung 31 vorgesehen, durch die ein Unterdruck in den gasdicht abgeschlossenen Raum eingebracht wird, der mit Hilfe eines Vakuum-Warngeräts überwacht ist. Mit Hilfe dieser Anordnung wird sowohl die Gasdichtheit der Schweißverbindung 16 als auch die Gasdichtheit der Schweißverbindung 17 überprüft. Nach der Überprüfung wird die Prüfbohrung 31 wieder gasdicht verschlossen.

Sowohl die Innenwand 25 als auch die Außenwand 26 des Behälters sind aus einem Werkstoff mit der Handelsbezeichnung "Selar" hergestellt, wodurch sowohl die Innenwand 25 als auch die Außenwand 26 als Barriereschicht dienen. Eine Permeation insbesondere von leicht flüchtigen Kohlenwasserstoffverbindungen wird dadurch wirkungsvoll verhindert. Die Prüfbohrung wird vorzugsweise an der äußeren Schweißverbindung 17 angebracht. Alternativ kann die Prüfbohrung jedoch auch an der inneren Schweißverbindung 16 vorgesehen werden. Erfasst das Vakuum-Warngerät einen Druckanstieg, wird anschließend über die Prüfbohrung 31 ein Überdruck angelegt, indem Gas über die Prüfbohrung 31 in den abgeschlossenen Raum zwischen den Anschlussflächen 12 eingebracht wird. Sowohl die umlaufende Schweißnaht 17 als auch die umlaufende Schweißnaht 16 werden mit Hilfe eines Lecksprays benetzt, durch das ein austretendes Gas, insbesondere austretende Luft, sehr einfach sichtbar gemacht werden kann, wodurch die Leckstelle / die Leckstellen leicht lokalisiert wird/werden können.

Alternativ sind, wie in Figur 4 gezeigt, Öffnungen zwischen den einzelnen Hohlräumen der einzelnen Segmente des Behälters vorhanden, wobei dann nur eine Prüfbohrung in einer der Schweißnähte 16, 17 oder in einer Innen- oder Außenwand des Behälters erforderlich ist, um die Dichtheit aller Schweißnähte des doppelwandigen Behälters sicher in einem Prüfvorgang zu überprüfen. In diesem Fall wird das Vakuum dann in allen Bereichen zwischen der Innenwand und der Außenwand eingebracht und dringt über die Öffnung 30 auch in den Bereich der Anschlussflächen 12 bis zu den Schweißnähten 16, 17 vor, so dass die Dichtheit der Schweißverbindungen 16, 17 und zusätzlich die Dichtheit der Innen- und Außenwände 25, 26 gleichzeitig mit der einen Prüfbohru ng überprüft, d.h. kontrolliert, werden kann. Alternativ wird bei anderen Ausführungsbeispielen anstatt des Unterdrucks ein Überdruck angelegt und der Druckabfall mit Hilfe einer geeigneten Mess- und Auswertevorrichtung erfasst.

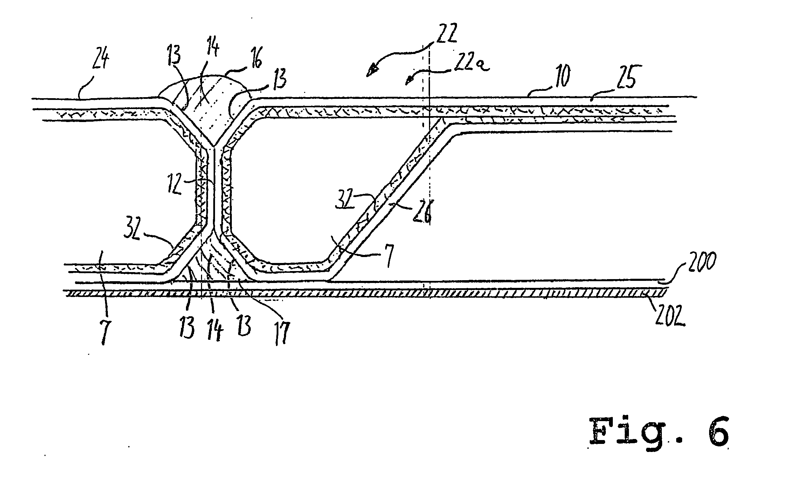

In Figur 6 ist eine Schnittdarstellung eines Ausschnitts der Behälterwand eines doppelwandigen Behälters dargestellt, der vorzugsweise zur Lagerung von Gefahrgut genutzt wird. Die Innenschale hat dabei im wesentlichen den gleichen Aufbau, wie der in Figur 5 dargestellte Behälter. Der Behälter hat ferner eine Außenschale 202, die an der Außenwand der Innenschale des Behälters angeordnet ist, wobei zwischen der Außenwand der Innenschale und der Innenwand der Außenschale ein Hohlraum 200 gebildet wird. Die Innenschale und die Außenschale sind derart angeordnet, dass der Hohlraum 2 00 gasdicht zur Umgebung abgeschlossen ist. Die Gasdichtheit des Hohlraum s 200 wird mit Hilfe einer Überwachungsvorrichtung, insbesondere einem Vakuum-Warngerät, überwacht. Die Schweißnähte 17 an der Außenwand der Innenschale sind derart ausgeführt bzw. nachbearbeitet, dass sie im wesentlichen nicht aus der Außenseite der Innenschale hervorstehen.

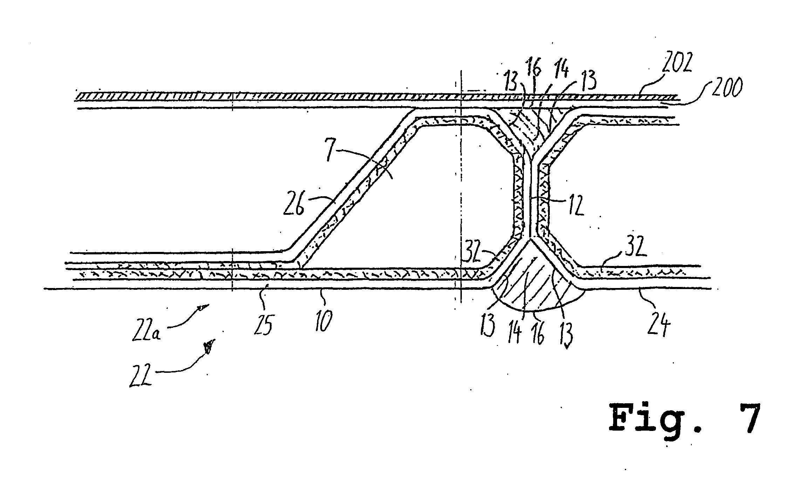

Gegenüber dem in Figur 6 dargestellten Behälter ist der doppelwandige Behälter nach Figur 7 derart aufgebaut, dass die Schale 202 die Innenschale und die mit Hilfe der Segmente 22a und 24 zusammengesetzte Schale die Außenschale des Behälters bildet. Dadurch ist es möglich, die mechanischen Anforderungen an die Innenschale 202 zu verringern.

Auch bei den Behältern nach Figur 6 und Figur 7 können Abstandshalter im Hohlraum 200 und/oder ein offenporiger Kunststoffschaum vorgesehen sein.

Obgleich in den Zeichnungen und in der vorhergehende n Beschreibung bevorzugte Ausführungsbeispiele aufgezeigt und detailliert besch rieben worden sind, soll sie lediglich als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen.

### Bezugszeichenliste

- 1: Behälter
- 2, 22: Mittelteil
- 2a, 2b, 2c, 22a: Ringsegmente
- 4, 24: Endteile
- 5: Versteifungsrippen
- 6: Befüll- und Entleerungsöffnung
- 7: Kammer
- 10,25: Innenwand
- 11, 26: Außenwand
- 12: Anschlussfläche
- 13: Schrägen
- 14: V-förmige Nut
- 15: Blasöffnung
- 16, 17: Schweißnaht
- 27, 28, 29: Abstandshalter
- 30: Öffnung
- 31: Prüfbohrung
- 32: offenporiger Kunststoffschaum
- 100,200: Zwischenraum
- 202: Schale

## Patentansprüche

1. Verfahren zum Überprüfen der Dichtheit eines Behälters zur Aufnahme von Medien,
bei dem der Behälter (1) aus mindestens zwei Segmenten (2a, 4) zusammengesetzt wird, die an den Rändern ihrer Stirnflächen umlaufend mit je einer Schweißverbindung (16, 17) derart verbunden werden, dass ein abgeschlossener Raum zwischen den Stirnflächen gebildet wird, der von der Schweißverbindung und zumindest einem Bereich der Stirnflächen umschlossen wird,
in dem abgeschlossenen Raum ein zum Umgebungsdruck verschiedener Innendruck angelegt wird,
und bei dem eine Druckänderung des Innendrucks überwacht wird.

2. Verfahren nach Anspruch 1, **dadurch gekennzeichnet, dass** der abgeschlossene Raum ein ringförmiger Raum ist, der sich um den Behälterquerschnitt herum erstreckt

3. Verfahren nach einem der vorhergehenden Ansprüche, **dadurch gekennzeichnet, dass** der Innendruck über eine Öffnung (31), insbesondere eine Bohrung, eingebracht und/oder überwacht wird.

4. Verfahren nach einem der vorhergehenden Ansprüche, **dadurch gekennzeichnet, dass** als Innendruck ein Unterdruck gegenüber dem Umgebungsdruck angelegt wird, und dass eine Druckdifferenz des Innendrucks zum Umgebungsdruck überwacht wird.

5. Verfahren nach Anspruch 4, **dadurch gekennzeichnet, dass** bei einer Änderung der Druckdifferenz, die auf eine Leckage schließen lässt, über die Öffnung (31) ein Überdruck angelegt wird, wobei ein Gas zum Erzeugen eines Überdrucks eingebracht wird,
und dass ein Mittel im Bereich der Schweißverbindung aufgebracht wird, durch dass die Leckagestelle bei einem Gasaustritt sichtbar gemacht wird.

6. Verfahren nach Anspruch 5, **dadurch gekennzeichnet, dass** als Mittel ein Leckspray aufgebracht wird.

7. Verfahren nach einem der vorhergehenden Ansprüche, **dadurch gekennzeichnet, dass** die, Segmente (2a, 4) des Behälters (1) aus einem Kunststoffmaterial hergestellt sind.

8. Verfahren nach einem der vorhergehenden Ansprüche, **dadurch gekennzeichnet, dass** mindestens ein Segment (2a, 4) im Blasformverfahren hergestellt wird.

9. Verfahren nach einem der vorhergehenden Ansprüche, **dadurch gekennzeichnet, dass** der Behälter (1) mindestens zwei schalenartige Endsegmente (4) mit jeweils einer ringförmigen ebenen Anschlussfläche als Stirnfläche enthält, und
dass der Behälter (1) mindestens ein im wesentlichen zylinderförmiges Mittelsegment (2) mit ebenfalls ringförmigen, ebenen Anschlussflächen als Stirnflächen enthält, wobei die Anschlussflächen des Mittelsegments (2) im wesentlichen mit der Anschlussfläche eines der Endsegmente (4) deckungsgleich sind.

10. Verfahren nach Anspruch 8, **dadurch gekennzeichnet, dass** das Mittelsegment eine Befüll- und Entleerungsöffnung (6), vorzugsweise einen Dom, enthält.

11. Verfahren nach Anspruch 8 oder 9, **dadurch gekennzeichnet, dass** zumindest das Mittelteil mit als Kammern (7) ausgebildete Versteifungsrippen (5) versehen ist, wobei zumindest eine Kammer (7) an eine Stirnseite angrenzt, die die Anschlussfläche (12) enthält.

12. Verfahren nach einem der vorhergehenden Ansprüche, **dadurch gekennzeichnet, dass** jedes der Segmente (2a, 4) im Bereich ihrer Anschlussflächen mindestens eine umlaufende Kammer (7) hat, und dass
die Anschlussflächen (12) an ihren umlaufenden Begrenzungskanten in zurücklaufende Schrägen (13) zur Bildung von Schweißnuten (14) zwischen den Segmenten (2a, 4) übergehen.

13. Verfahren nach Anspruch 12, **dadurch gekennzeichnet, dass** die Schrägen (13) unter einem Winkel von etwa 10° bis 45° verlaufen.

14. Verfahren nach einem der vorhergehenden Ansprüche, **dadurch gekennzeichnet, dass** die Öffnung (31) in einer außen am Behälter liegende Schweißnaht (17) eingebracht wird.

## Claims

1. A method for checking the leak-tightness of a container for holding media,
in which the container (1) is assembled from at least two segments (2a, 4), which are connected to each other at the edges of their end surfaces by one circumferential weld (16, 17) each in such a way that a closed space is formed between the end surfaces, which space is enclosed by the welds and by at least an area of the end surfaces,
an internal pressure different from the ambient pressure is applied to the closed space,
and in which a pressure change of the internal pressure is monitored.

2. The method according to claim 1, **characterized in that** the closed space is a ring-shaped space, which extends around the cross-section of the container.

3. The method according to one of the preceding claims, **characterized in that** the internal pressure is introduced and/or monitored by way of an opening (31), especially a bore.

4. The method according to one of the preceding claims, **characterized in that** as an internal pressure a negative pressure with respect to the ambient pressure is applied, and **in that** a pressure difference between the internal pressure and the ambient pressure is monitored.

5. The method according to claim 4, **characterized in that** given a change in the pressure difference which suggests a leakage, a positive pressure is applied via the opening (31), a gas for producing a positive pressure being introduced,
and **in that** means by which the point of leakage is made visible in case of an escape of gas are applied in the area of the weld.

6. The method according to claim 5, **characterized in that** a leak-detection spray is used as the means.

7. The method according to one of the preceding claims, **characterized in that** the segments (2a, 4) of the container (1) are made of a plastic material.

8. The method according to one of the preceding claims, **characterized in that** at least one segment (2a, 4) is produced by blow-moulding.

9. The method according to one of the preceding claims, **characterized in that** the container (1) contains at least two shell-like end segments (4), each with a flat, ring-shaped connecting surface as the end surface, and
**in that** the container (1) comprises at least one essentially cylindrical centre segment (2) also with flat, ring-shaped connecting surfaces as its end surfaces, the connecting surfaces of the centre segment (2) essentially coinciding with the connecting surface of one of the end segments (4).

10. The method according to claim 8, **characterized in that** the centre segment contains a filling and emptying opening (6), preferably a dome.

11. The method according to claim 8 or 9, **characterized in that** at least the centre part is provided with stiffening ribs (5) designed as chambers (7), at least one chamber (7) being adjacent to an end surface which carries the connecting surface (12).

12. The method according to one of the preceding claims, **characterized in that** each of the segments (2a, 4) has at least one circumferential chamber (7) in the area of its connecting surfaces, and **in that**
along their circumferential boundary edges, the connecting surfaces (12) extend backward to form bevels (13) which create welding grooves (14) between the segments (2a, 4).

13. The method according to claim 12, **characterized in that** the bevels (13) have an angle of approximately 10°-45°.

14. The method according to one of the preceding claims, **characterized in that** the opening (31) is introduced into a weld (17) situated externally on the container.

## Revendications

1. Procédé destiné à surveiller l'étanchéité d'un conteneur destiné à recevoir des fluides,
dans lequel le conteneur (1) est formé par au moins deux segments (2a, 4) qui, au niveau des bords de leurs faces frontales, sont assemblés sur tout le pourtour par un joint soudé (16, 17), de telle sorte qu'il se forme un espace fermé entre les faces frontales, lequel espace est entouré par le joint soudé et par au moins une zone des faces frontales,
une pression interne, différente de la pression ambiante, est appliquée dans l'espace fermé,
et dans lequel une variation de la pression interne est surveillée.

2. Procédé selon la revendication 1, **caractérisé en ce que** l'espace fermé est un espace annulaire, qui s'étend tout autour de la section du conteneur.

3. Procédé selon l'une quelconque des revendications précédentes, **caractérisé en ce que** la pression interne est introduite et/ou est surveillée par l'intermédiaire d'un orifice (31), en particulier un perçage.

4. Procédé selon l'une quelconque des revendications précédentes, **caractérisé en ce que** la pression interne appliquée est une dépression par rapport à la pression ambiante, et **en ce que** la différence entre la pression interne et la pression ambiante est surveillée.

5. Procédé selon la revendication 4, **caractérisé en ce qu'**en présence d'une variation de la différence de pression, qui laisse présager une fuite, une surpression est appliquée via l'orifice (31), un gaz destiné à générer une surpression étant introduit, et **en ce qu'**une substance est appliquée dans la zone du joint soudé, par laquelle la zone de fuite est rendue visible lors de l'échappement d'un gaz.

6. Procédé selon la revendication 5, **caractérisé en ce que** la substance appliquée est un spray de détection de fuite.

7. Procédé selon l'une quelconque des revendications précédentes, **caractérisé en ce que** les segments (2a, 4) du conteneur (1) sont réalisés dans une matière plastique.

8. Procédé selon l'une quelconque des revendications précédentes, **caractérisé en ce qu'**au moins un segment (2a, 4) est réalisé par un procédé de soufflage.

9. Procédé selon l'une quelconque des revendications précédentes, **caractérisé en ce que** le conteneur (1) comporte au moins deux segments de terminaux (4) en forme de coque, munis chacun d'une surface de raccordement plane annulaire formant une face frontale, et **en ce que** le conteneur (1) comporte au moins un segment médian (2) sensiblement cylindrique, également muni de surfaces de raccordement planes annulaires formant des faces frontales, les surfaces de raccordement du segment médian (2) coïncidant sensiblement avec la surface de raccordement d'un des segments terminaux (4).

10. Procédé selon la revendication 8, **caractérisé en ce que** le segment médian comporte un orifice de remplissage et de vidage (6), de préférence un dôme.

11. Procédé selon la revendication 8 ou 9, **caractérisé en ce qu'**au moins la partie médiane est munie de nervures de raidissement (5), réalisées pour former des chambres (7), sachant qu'au moins une chambre (7) est adjacente à une face frontale qui comporte la surface de raccordement (12).

12. Procédé selon l'une quelconque des revendications précédentes, **caractérisé en ce que** chacun des segments (2a, 4) comporte au moins une chambre (7) périphérique dans la zone de ses surfaces de raccordement, et **en ce que** les surfaces de raccordement (12), au niveau de leurs bords de délimitation périphériques, se prolongent par des chanfreins (13) orientés vers l'arrière en vue de la formation de rainures de soudage (14) entre les segments (2a, 4).

13. Procédé selon la revendication 12, **caractérisé en ce que** les chanfreins (13) s'étendent en formant un angle d'environ 10° à 45°.

14. Procédé selon l'une quelconque des revendications précédentes, **caractérisé en ce que** l'orifice (31) est ménagé dans un cordon de soudure (17) situé à l'extérieur sur le conteneur.
